# FASCICULE DE BREVET EUROPEEN

(11) **EP 1 645 006 B1**
(45) Date de publication et mention de la délivrance du brevet: **11.04.2007**
(21) Numéro de dépôt: 04767384.3
(22) Date de dépôt: 18.06.2004
(51) Int. Cl.: H01M 8/04, H01M 8/10

(54) **PILE A COMBUSTIBLE DANS LAQUELLE UN FLUIDE CIRCULE SENSIBLEMENT PARALLELEMENT A LA MEMBRANE ELECTROLYTIQUE ET PROCEDE DE FABRICATION D'UNE TELLE PILE A COMBUSTIBLE**
BRENNSTOFFZELLE, IN DEM EIN FLUID IM WESENTLICHEN PARALLEL ZU DER ELEKTROLYTISCHEN MEMBRAN ZIRKULIERT UND VERFAHREN ZUR HERSTELLUNG EINER SOLCHEN BRENNSTOFFZELLE
FUEL CELL IN WHICH A FLUID CIRCULATES ESSENTIALLY PARALLEL TO THE ELECTROLYTIC MEMBRANE AND METHOD FOR PRODUCTION OF SUCH A FUEL CELL

(30) Priorité: 01.07.2003 FR 0307961
(43) Date de publication de la demande: 12.04.2006
(73) Titulaire: COMMISSARIAT A L'ENERGIE ATOMIQUE, 75752 Paris Cédex 15 (FR)
(72) Inventeur: LAURENT, Jean-Yves, F-38640 Claix (FR); ARROYO, Jean, F-38240 Meylan (FR); NAYOZE, Christine, F-38600 Fontaine (FR); ROUX, Christel, F-38210 Saint-Quentin-Sur-Isère (FR)
(74) Mandataire: Jouvray, Marie-Andrée
(86) Numéro de dépôt international: PCT/FR2004/001525
(87) Numéro de publication internationale: WO 2005/015672

(56) Documents cités:
- EP-A- 1 258 937
- EP-A- 1 317 011
- WO-A-00/45457
- FR-A- 2 814 857
- US-A1- 2002 076 589

## Description

### Domaine technique de l'invention

L'invention concerne une pile à combustible, et plus particulièrement une micro-pile à combustible comportant un substrat supportant une membrane électrolytique comportant des première et seconde faces sur lesquelles sont respectivement disposées des première et seconde électrodes, les première et seconde électrodes comportant respectivement des premier et second éléments catalytiques, des moyens de circulation étant destinés à amener des premier et second fluides respectivement à proximité des premier et second éléments catalytiques.

L'invention concerne également un procédé de fabrication d'une telle pile à combustible.

### État de la technique

Dans les piles à combustible, l'approvisionnement des électrodes en fluide réactif et l'évacuation des produits formés lors du fonctionnement de la pile représentent deux difficultés principales, notamment dans les micro-piles à combustible utilisées dans les équipements portables. En effet, la miniaturisation des piles à combustible impose un stockage et un circuit de circulation en combustible, en comburant et en produits formés au cours du fonctionnement de la pile, dans des volumes restreints.

Les combustibles utilisés dans les micro-piles sont, généralement, sous forme liquide. En effet, les combustibles liquides ayant une densité volumique énergétique supérieure à celle de l'hydrogène, ils occupent un volume plus réduit que l'hydrogène. Ainsi, il est courant d'utiliser des piles à combustible utilisant du méthanol comme combustible, plus connues sous le nom de piles à combustible de type « DMFC » (« Direct Methanol Fuel Cell »). Le méthanol est oxydé à l'anode, sur une couche catalytique active, pour donner des protons, des électrons et du dioxyde de carbone. Une membrane conductrice protonique disposée entre l'anode et une cathode conduit les protons vers la cathode, de manière à faire réagir les protons avec de l'oxygène et former de l'eau. Ainsi, il est nécessaire d'évacuer le dioxyde de carbone et l'eau se formant respectivement à l'anode et à la cathode, lors du fonctionnement de la pile.

D'une manière générale, il est connu d'utiliser des circuits d'approvisionnement des électrodes et de la membrane électrolytique. Les circuits sont, généralement, sous forme de canaux d'approvisionnement et/ou des couches de diffusion micro-poreuses amenant les fluides perpendiculairement aux électrodes ou à la membrane.

Ainsi, le document FR-A-2814857 décrit une micro-pile à combustible comportant une électrode à oxygène et une électrode à combustible, le combustible étant, de préférence, constitué par un mélange de méthanol et d'eau. Un support micro-poreux imprégné d'un polymère électrolytique formant une membrane électrolytique est disposé entre les deux électrodes. Le support micro-poreux est constitué par un matériau semi-conducteur oxydé rendu poreux pour former des canaux parallèles entre eux. Les canaux permettent de réaliser des échanges électrochimiques entre l'anode et la cathode. Le support micro-poreux est alimenté en combustible et en comburant par des canaux de diffusion respectivement reliés à une source de combustible et une source d'air.

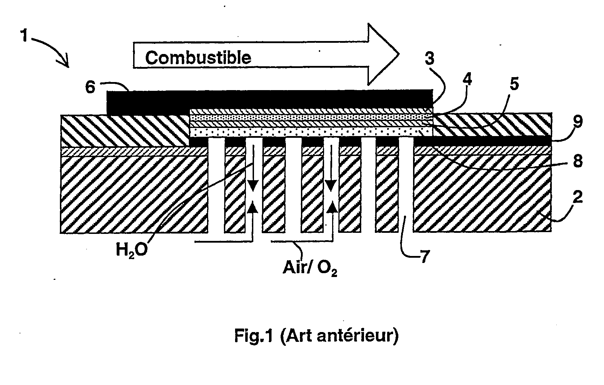

Il est également connu d'utiliser une couche de diffusion poreuse pour approvisionner une électrode en fluide réactif, comme représenté à la figure 1. Ainsi, une pile à combustible 1 comporte un substrat 2 supportant une anode 3, une membrane électrolytique 4 et une cathode 5. Un collecteur de courant anodique 6 est disposé sur l'anode 3 et la circulation du combustible est tangentielle à l'anode 3. L'approvisionnement en air de la cathode est réalisé au moyen de canaux de circulation 7 formés verticalement dans le substrat. Les canaux de circulation 7 permettent donc de transporter l'air depuis une source en air (non représentée) vers une couche de diffusion micro-poreuse 8 disposée entre la cathode 5 et un collecteur de courant 9. Une telle pile à combustible a été décrite dans le document WO-A-0045457. La pile à combustible comporte, ainsi, un substrat supportant des première et seconde électrodes entre lesquelles est disposée une membrane électrolytique. L'approvisionnement de la première électrode en fluide réactif est réalisé par une fine couche poreuse disposée entre la première électrode et un substrat. Ledit substrat comporte des canaux de diffusion verticaux reliés à une cavité elle même approvisionnée par une source de combustible. Ce type d'approvisionnement en fluide réactif n'est, cependant, pas satisfaisant. En effet, les fluides résidus tels que l'eau se formant à la cathode dans la pile à combustible 1, sont évacués par les mêmes voies de circulation que le fluide réactif tel que l'air dans la pile à combustible 1, en sens inverse. Le fait de faire circuler deux flux opposés dans une voie de circulation ayant un diamètre relativement restreint limite l'accès des fluides réactifs à la cathode.

Le document EP-A-1 258 937 décrit une pile à combustible comprenant des canaux parallèles non reliés entre eux et délimités par des parois, destinés à l'alimentation en réactifs gazeux.

### Objet de l'invention

L'invention a pour but de remédier à ces inconvénients et plus particulièrement de proposer une pile à combustible permettant à la fois une évacuation efficace et rapide des composés formés lors de son fonctionnement et un renouvellement rapide des fluides réactifs.

Selon l'invention, ce but est atteint par le fait que les moyens de circulation du premier fluide sont conçus de manière à le faire circuler sensiblement parallèlement à la première face de la membrane électrolytique, dans une cavité formée dans le substrat.

Selon un développement de l'invention, la cavité comporte une pluralité de plots supportant ladite membrane électrolytique.

Selon un mode de réalisation préférentiel, le premier élément catalytique est constitué par une pluralité de zones catalytiques respectivement disposées au sommet des plots de la cavité.

Selon un autre mode de réalisation préférentiel, le premier élément catalytique est constitué par une pluralité de zones catalytiques, lesdites zones catalytiques étant respectivement constituées par les plots.

L'invention a également pour but un procédé de fabrication d'une telle pile à combustible, facile à mettre en oeuvre et utilisant des techniques mises en oeuvre dans le domaine de la microtechnologie.

Selon l'invention, ce but est atteint par le fait que le procédé de fabrication consiste à réaliser une gravure ionique réactive dans le substrat, de manière à former simultanément la cavité et la pluralité de plots.

Selon un développement de l'invention, le procédé de fabrication consiste à déposer, au sommet de chaque plot, par dépôt physique en phase vapeur, un promoteur de croissance destiné à favoriser la formation d'un support de catalyseur sur lequel est déposée, par électrodéposition, une couche catalytique.

Selon l'invention, ce but est également atteint par le fait que le procédé de fabrication consiste à graver la cavité dans le substrat, puis à former la pluralité de plots par croissance électrolytique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente en coupe une pile à combustible selon l'art antérieur.
La figure 2 est une vue en coupe d'un mode particulier de réalisation d'une pile à combustible selon l'invention.
La figure 3 représente une vue d'ensemble d'une partie de la pile à combustible selon la figure 2.
La figure 4 représente une vue de dessus d'une cavité d'une pile à combustible selon l'invention.
La figure 5 représente une vue de dessus des moyens de circulation d'un fluide dans la pile à combustible selon la figure 1.
Les figures 6 à 8 illustrent différentes étapes d'un premier procédé de fabrication des zones catalytiques de la pile à combustible selon la figure 3.
Les figures 9 à 14 illustrent différentes étapes d'un second procédé de fabrication d'une pile à combustible selon l'invention.

### Description de modes particuliers de réalisation.

Une pile à combustible selon l'invention comporte un substrat supportant une membrane électrolytique comportant des première et seconde faces. Des première et seconde électrodes sont respectivement disposées sur les première et seconde faces de la membrane électrolytique et elles comportent respectivement des premier et second éléments catalytiques destinés à déclencher une réaction électrochimique. Des premier et second fluides sont respectivement destinés à être amenés à proximité des premier et second éléments catalytiques. Ainsi, l'approvisionnement du premier fluide est réalisé de manière à le faire circuler sensiblement parallèlement à la première face de la membrane électrolytique, dans une cavité formée dans le substrat et à le mettre en contact avec le premier élément catalytique. Ainsi, le premier fluide associé au premier élément catalytique peut être aussi bien être le comburant associé à l'élément catalytique de la cathode ou le combustible associé à l'élément catalytique de l'anode. La cavité formée dans le substrat peut comporter une pluralité de plots supportant la membrane électrolytique.

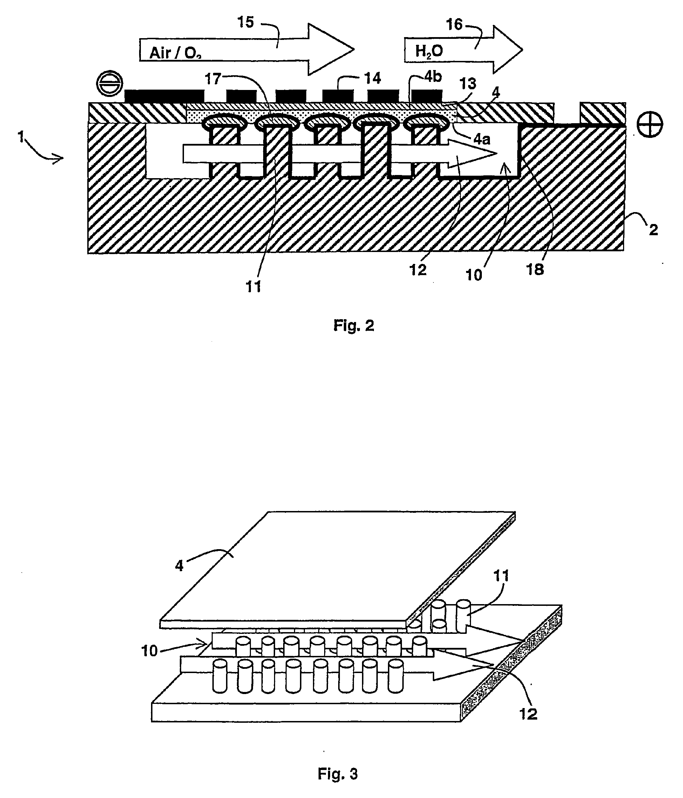

Dans un mode particulier de réalisation représenté aux figures 2 et 3, une cavité 10 est formée dans le substrat 2 d'une pile à combustible 1 et elle comporte une pluralité de plots 11. La cavité 10 est destinée à amener un premier fluide à proximité d'une première électrode et les plots 11 forment, de préférence, un réseau destiné à répartir le premier fluide de manière homogène dans la cavité 10. Par exemple, à la figure 2, le premier fluide est un fluide combustible tel qu'un mélange d'eau et de méthanol et la première électrode est une anode. L'entrée du fluide combustible dans la cavité 10 et sa sortie de la cavité 10 peuvent être réalisées par tout type de moyens appropriés. À titre d'exemple, les parois de la cavité 10 peuvent être poreuses ou bien elles peuvent comporter des orifices d'entrée et de sortie connectés à des canaux de circulation ou à une source en combustible. Ainsi, le flux de fluide combustible généré dans la cavité 10 et représenté par une flèche 12 à la figure 2, se déplace horizontalement dans la cavité 10, entre les plots 11 et sensiblement parallèlement à la première face 4a de la membrane électrolytique 4.

Les plots 11 peuvent avoir tout type de forme appropriée. Ils peuvent, par exemple, avoir une section circulaire, rectangulaire ou polygonale. Ils peuvent également être répartis dans la cavité 10 selon tout type de disposition, les plots 11 pouvant, par exemple, être alignés sur plusieurs rangées ou former un réseau en quinconce. Cette répartition est ajustée de sorte que le fluide combustible puisse se répartir de façon homogène dans la cavité 10. Le nombre de plots 11 dans la cavité 10 peut également être ajusté en fonction du temps de séjour du fluide combustible dans la cavité 10. La pile à combustible peut également comporter des moyens de contrôle du flux de fluide combustible, de manière à ajuster le temps de passage du fluide combustible dans la cavité et donc le temps de réaction électrochimique.

Les plots 11 ont, de préférence, les mêmes dimensions et leur hauteur est égale à la profondeur de la cavité 10. À titre d'exemple, la hauteur des plots peut être de 30 micromètres et leur diamètre peut être compris entre 10 micromètres et 40 micromètres, pour des plots cylindriques. De plus, la distance entre deux plots 11 est, de préférence, inférieure ou égale à 50 micromètres, de sorte que l'ensemble des plots 11 puisse supporter une membrane électrolytique 4.

La membrane électrolytique 4 comporte des première et seconde faces 4a et 4b, respectivement destinées à être en contact avec les premier et second éléments catalytiques des première et seconde électrodes. Ainsi, la première face 4a de la membrane électrolytique 4 est posée sur les plots 11 et les extrémités de la membrane électrolytique 4 sont solidaires du substrat 2. La seconde face 4b de la membrane électrolytique 4 est recouverte par un élément catalytique 13 sous forme de couche mince et un élément collecteur de courant 14 discontinu, l'élément catalytique 13 et l'élément collecteur de courant 14 formant ainsi la seconde électrode. Le fluide associé à la seconde électrode est, à la figure 2, un fluide comburant tel que de l'air et la seconde électrode correspond à la cathode de la pile à combustible. Le flux du fluide comburant est schématisé, à la figure 2, par une flèche 15 disposée au-dessus de la cathode. Ainsi, l'air circule parallèlement à la cathode, de sorte que le flux d'air puisse évacuer vers l'extérieur de la pile à combustible, l'eau produite (flèche 16) à la cathode, lors du fonctionnement de la pile à combustible.

Au sommet de chaque plot 11, est, de préférence, disposée une zone catalytique 17 destinée à déclencher une réaction électrochimique avec le fluide combustible. L'ensemble des zones catalytiques 17 forme ainsi, l'élément catalytique de l'anode. Les plots 11 supportant la membrane électrolytique 4, chaque zone catalytique 17 est en contact avec la première face 4a de la membrane électrolytique 4 et un collecteur de courant 18 est déposé sur la surface des plots 11 et sur les parois de la cavité 10.

Une telle pile à combustible permet de faire circuler le fluide combustible sensiblement parallèlement à la première face 4a de la membrane électrolytique (figure 3). Le flux ainsi créé permet de renouveler efficacement le fluide combustible au niveau des zones catalytiques 17 de l'anode. De plus, contrairement à un circuit de circulation selon l'art antérieur (figues 1 et 5), les produits formés à l'anode lors du fonctionnement de la pile à combustible sont entraînés par le flux de fluide combustible. Ainsi, les produits formés ne freinent pas le renouvellement des zones catalytiques 17 en fluide combustible.

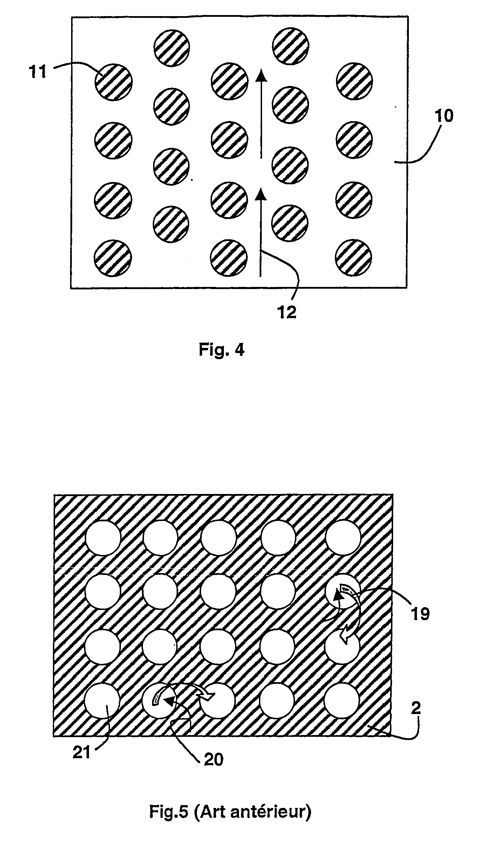

En effet, dans la pile à combustible 1 selon la figure 2, le flux de fluide combustible, représenté par la flèche 12 à la figure 4, circule entre les plots 11 de la cavité 10 et entraîne avec lui les fluides résidus formés à l'anode, tels que le dioxyde de carbone pour un fluide combustible comportant du méthanol et de l'eau. Par contre, dans une pile à combustible selon l'art antérieur, le flux de fluide combustible et le flux des fluides résidus, respectivement représentés par les flèches 19 et 20 à la figure 5, circulent en sens inverse dans les mêmes canaux de circulation 21. Les canaux de circulation 21 sont formés dans le substrat 2, et transportent le flux de fluide combustible perpendiculairement à la membrane électrolytique.

Selon un mode particulier de fabrication de la pile à combustible 1, une gravure ionique réactive, plus connue sous le nom RIE (« Reactive Ionique Etching »), dans le substrat 2 permet de former simultanément la cavité 10 et les plots 11. Le substrat peut être en silicium, en céramique ou en plastique. Une fois la cavité 10 et les plots 11 formés, un dépôt physique en phase vapeur de platine est réalisé sur la surface des plots 11 et sur les parois de la cavité 10, de manière à former une couche mince ayant une épaisseur de l'ordre d'un micromètre et formant le collecteur de courant 18 de l'anode.

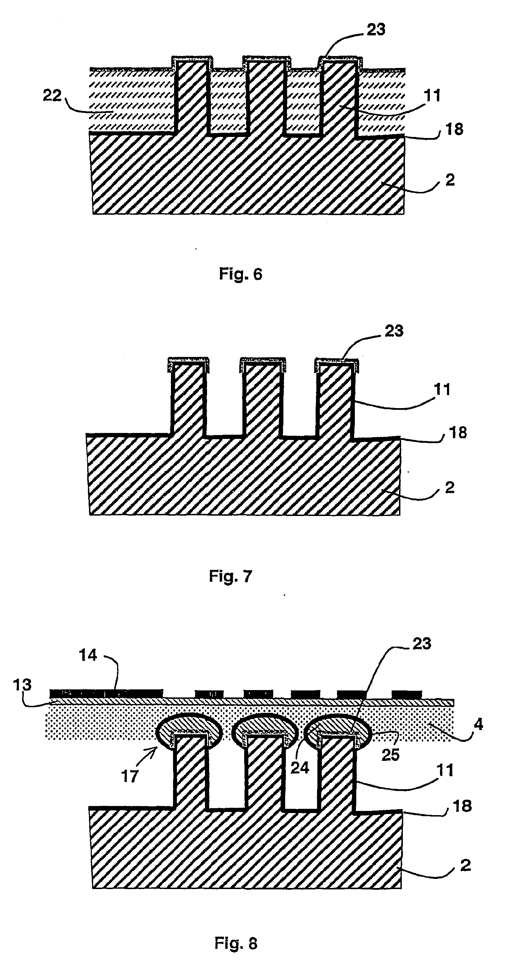

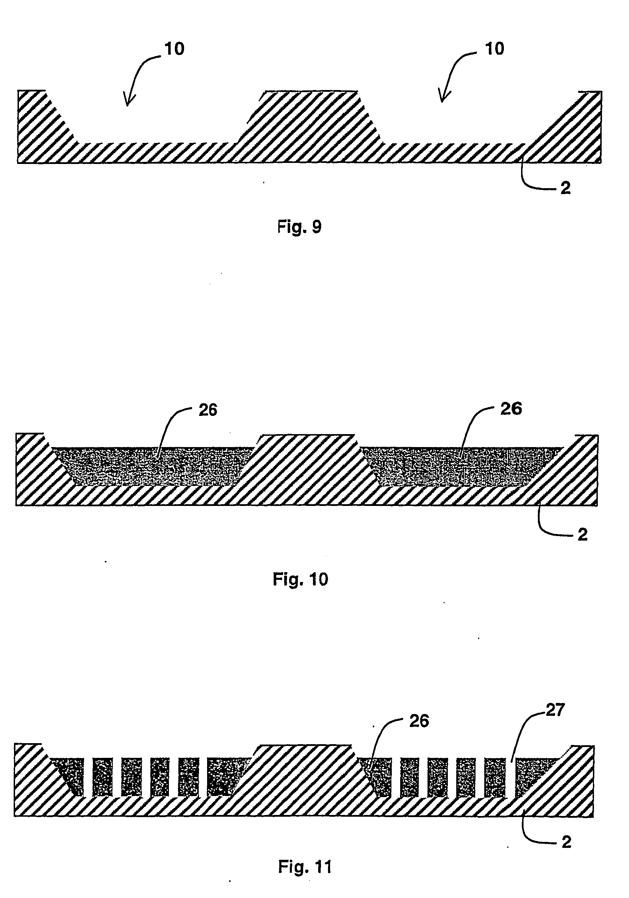

Les zones catalytiques 17 sont ensuite réalisées au sommet des plots 11, comme représenté aux figures 6 à 8. Ainsi, une couche en résine protectrice 22 est déposée dans la cavité 10 jusqu'à une hauteur prédéterminée, de sorte que la partie supérieure des plots 11 soit libre. Un dépôt physique en phase vapeur d'un promoteur de croissance 23 est réalisé dans la cavité 10, de manière à recouvrir la couche en résine protectrice et la partie supérieure des plots 11 (figure 6). Après avoir retiré la couche en résine protectrice 22 (figure 7), seules les parties supérieures des plots 11 sont recouvertes par une couche de promoteur de croissance 23 destiné à favoriser la formation d'un support de catalyseur 24 au sommet de chaque plot 11. Le support de catalyseur 24, de préférence constitué par des nanotubes de carbone, est ensuite recouvert d'une couche active catalytique 25, par électrodéposistion (figure 8). Le support de catalyseur 24 et la couche active catalytique 25 forment une zone catalytique 17 de l'élément catalytique de l'anode.

Une fois les zones catalytiques 17 formées, la membrane électrolytique 4, de préférence, en Nafion®, est étalée par un procédé de centrifugation, également appelé « Spin coating », puis elle est séchée. Le faible espace entre deux plots 11 permet de piéger un volume d'air qui empêche le matériau de la membrane encore liquide de couler avant d'avoir séché. L'élément catalytique de la cathode, de préférence constitué par un mélange de carbone platiné et de Nafion®, est ensuite étalé par pulvérisation sur la membrane électrolytique 4 séchée; puis le collecteur de courant 14 de la cathode est déposé par un dépôt physique en phase vapeur.

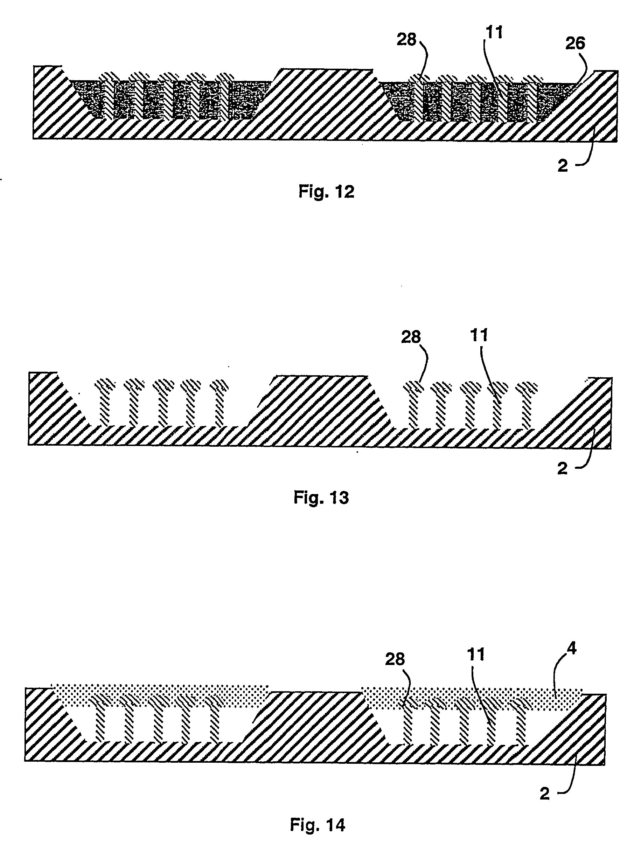

Selon une variante de réalisation, les zones catalytiques 17 de l'élément catalytique de l'anode peuvent être respectivement constituées par les plots 11 de la cavité 10. La cavité et les plots sont alors formés successivement. Ainsi, tel que représenté aux figures 9 à 14, il est possible de réaliser plusieurs piles à combustibles sur un même substrat. Deux cavités 10 sont gravées dans le substrat 2 et leurs parois sont métallisées (figure 9). Les plots 11 sont ensuite formés par croissance électrolytique et une couche en résine 26 épaisse est déposée dans les cavités 10 (figure 10). Des espaces 27 correspondant à la position souhaitée pour les plots 11 sont crées, par lithographie, dans la couche en résine 26 (figure 11). Puis, les plots 11 sont formés dans les espaces 25 par croissance électrolytique de platine (figure 12). Les plots 11 comportent, de préférence, à leur partie supérieure, une zone élargie constituant une tête 28. La couche en résine épaisse 26 est ensuite retirée pour libérer les cavités 10 (figure 14). Une couche destinée à former des membranes électrolytiques 4, de préférence en Nafion®, est déposée au-dessus des cavités 10 de sorte que les membranes électrolytiques 4 soient supportées par les plots 11. L'élément catalytique et le collecteur de courant de la cathode sont ensuite déposés sur la membrane électrolytique selon tout type de technique connue.

L'invention n'est pas limitée aux modes de réalisation décrits ci-dessus. Ainsi, le fluide destiné à circuler sensiblement parallèlement à la première face de la membrane électrolytique dans la cavité peut être le fluide comburant. De même, l'élément catalytique destiné à être en contact avec ledit fluide peut être continu. Par exemple, les zones catalytiques constituées par les plots ou formées au sommet des plots peuvent être jointives de manière à obtenir un élément catalytique continu. Les fluides combustibles peuvent être de tout type, liquides ou gazeux. La pile à combustible peut être, plus particulièrement, une pile à combustible de type DMFC et elle peut également être une micro-pile à combustible du type de celles utilisées dans les équipements portables.

## Revendications

1. Pile à combustible comportant un substrat (2) supportant une membrane électrolytique (4) comportant des première et seconde faces (4a, 4b) sur lesquelles sont respectivement disposées des première et seconde électrodes, les première et seconde électrodes comportant respectivement des premier et second éléments catalytiques, des moyens de circulation étant destinés à amener des premier et second fluides respectivement à proximité des premier et second éléments catalytiques, **caractérisée en ce que** les moyens de circulation du premier fluide sont conçus de manière à le faire circuler sensiblement parallèlement à la première face (4a) de la membrane électrolytique (4), dans une cavité (10) formée dans le substrat (2) et comportant une pluralité de plots (11) supportant ladite membrane électrolytique (4).

2. Pile à combustible selon la revendication 1, **caractérisée en ce que** la distance entre deux plots (11) est inférieure ou égale à 50 micromètres.

3. Pile à combustible selon l'une des revendications 1 et 2, **caractérisée en ce que** le premier élément catalytique est constitué par une pluralité de zones catalytiques (17) respectivement disposées au sommet des plots (11) de la cavité (10).

4. Pile à combustible selon l'une des revendications 1 et 2, **caractérisée en ce que** le premier élément catalytique est constitué par une pluralité de zones catalytiques (17), lesdites zones catalytiques (17) étant respectivement constituées par les plots (11).

5. Pile à combustible selon la revendication 4, **caractérisée en ce que** les plots (11) comportent, à leur partie supérieure, une zone élargie constituant une tête (28).

6. Pile à combustible selon l'une quelconque des revendications 1 à 4, **caractérisée en ce que** les plots (11) ont une section circulaire.

7. Pile à combustible selon l'une quelconque des revendications 1 à 4, **caractérisée en ce que** les plots (11) ont une section rectangulaire.

8. Pile à combustible selon l'une quelconque des revendications 1 à 4, **caractérisée en ce que** les plots (11) ont une section polygonale.

9. Pile à combustible selon l'une quelconque des revendications 1 à 8, **caractérisée en ce que** les plots (11) forment un réseau destiné à répartir le premier fluide de façon homogène dans la cavité (10).

10. Pile à combustible selon la revendication 9, **caractérisée en ce que** le réseau est en quinconce.

11. Procédé de fabrication d'une pile à combustible selon l'une quelconque des revendications 1 à 3, **caractérisé en ce qu'**il consiste à réaliser une gravure ionique réactive dans le substrat (2), de manière à former simultanément la cavité (10) et la pluralité de plots (11).

12. Procédé de fabrication selon la revendication 11, **caractérisé en ce qu'**il consiste à déposer, au sommet de chaque plot (11), par dépôt physique en phase vapeur, un promoteur de croissance (23) destiné à favoriser la formation d'un support de catalyseur (24) sur lequel est déposée, par électrodéposition, une couche catalytique (25).

13. Procédé de fabrication selon la revendication 12, **caractérisé en ce que** le support de catalyseur (24) est constitué par des nanotubes de carbone.

14. Procédé de fabrication d'une pile à combustible selon l'une des revendications 1, 2 et 4, **caractérisé en ce qu'**il consiste à graver la cavité (10) dans le substrat (2), puis à former la pluralité de plots (11) par croissance électrolytique.

## Claims

1. Fuel cell comprising a substrate (2) supporting an electrolytic membrane (4) comprising first and second faces (4a, 4b) on which first and second electrodes are respectively arranged, the first and second electrodes respectively comprising first and second catalytic elements, circulation means being designed to bring first and second fluids respectively in proximity to the first and second catalytic elements, fuel cell **characterized in that** the circulation means of the first fluid are designed in such a way as to make the latter flow in a direction substantially parallel to the first face (4a) of the electrolytic membrane (4), in a cavity formed in the substrate (2) and comprising a plurality of studs (11) supporting said electrolytic membrane (4).

2. Fuel cell according to claim 1, **characterized in that** the distance between two studs (11) is less than or equal to 50 micrometers.

3. Fuel cell according to one of the claims 1 and 2, **characterized in that** the first catalytic element is formed by a plurality of catalytic zones (17) respectively arranged at the top of the studs (11) of the cavity (10).

4. Fuel cell according to one of the claims 1 and 2, **characterized in that** the first catalytic element is formed by a plurality of catalytic zones (17), said catalytic zones (17) being respectively formed by the studs (11).

5. Fuel cell according to claim 4, **characterized in that** the studs (11) comprise, at the top part thereof, a broader zone forming a head (28).

6. Fuel cell according to any one of the claims 1 to 4, **characterized in that** the studs (11) have a circular cross-section.

7. Fuel cell according to any one of the claims 1 to 4, **characterized in that** the studs (11) have a rectangular cross-section.

8. Fuel cell according to any one of the claims 1 to 7, **characterized in that** the studs (11) have a polygonal cross-section.

9. Fuel cell according to any one of the claims 1 to 8, **characterized in that** the studs (11) form a network designed to distribute the first fluid homogeneously in the cavity (10).

10. Fuel cell according to claim 9, **characterized in that** the network is arranged in zig-zagged manner.

11. Method for production of a fuel cell according to any one of the claims 1 to 3, **characterized in that** it consists in performing reactive ionic etching in the substrate (2) so as to simultaneously form the cavity (10) and the plurality of studs (11).

12. Method for production according to claim 11, **characterized in that** it consists in depositing on the top of each stud (11), by physical vapour deposition, a growth promoting substance (23) designed to foster formation of a catalyzer support (24) whereon a catalytic layer (25) is deposited by electroplating.

13. Method for production according to claim 12, **characterized in that** the catalyzer support (24) is formed by carbon nanotubes.

14. Method for production of a fuel cell according to one of the claims 1, 2 and 4, **characterized in that** it consists in etching the cavity (10) in the substrate (2) and in then forming the plurality of studs (11) by electrolytic growth.

## Patentansprüche

1. Brennstoffzelle mit einem Substrat (2), das eine elektrolytische Membran (4) trägt, die eine erste und eine zweite Seite (4a, 4b) aufweist, auf der jeweils eine erste und eine zweite Elektrode angeordnet sind, wobei die erste und zweite Elektrode jeweils ein erstes und ein zweites katalytisches Element umfassen, wobei Strömungsmittel dazu vorgesehen sind, ein erstes und ein zweites Fluid zuzuführen, und zwar jeweils nahe dem ersten bzw. dem zweiten katalytischen Element, **dadurch gekennzeichnet, dass** die Strömungsmittel des ersten Fluids so vorgesehen sind, dass man dieses im Wesentlichen parallel zur ersten Seite (4a) der elektrolytischen Membran (4) in einem in dem Substrat (2) gebildeten Hohlraum (10) zirkulieren lässt, der eine Mehrzahl Stützstifte (11) aufweist, die die elektrolytische Membran (4) tragen.

2. Brennstoffzelle nach Anspruch 1, **dadurch gekennzeichnet, dass** der Abstand zwischen zwei Stützstiften (11) gleich 50 Mikrometern ist oder darunter liegt.

3. Brennstoffzelle nach einem der Ansprüche 1 und 2, **dadurch gekennzeichnet, dass** das erste katalytische Element von einer Mehrzahl katalytischer Bereiche (17) gebildet wird, die jeweils an der Spitze der Stützstifte (11) des Hohlraums (10) angeordnet sind.

4. Brennstoffzelle nach einem der Ansprüche 1 und 2, **dadurch gekennzeichnet, dass** das erste katalytische Element von einer Mehrzahl katalytischer Bereiche (17) gebildet wird, welche katalytischen Bereiche (17) jeweils von den Stützstiften (11) gebildet werden.

5. Brennstoffzelle nach Anspruch 4, **dadurch gekennzeichnet, dass** die Stützstifte (11) vorzugsweise in ihrem oberen Bereich eine breitere Zone umfassen, die einen Kopf (28) bildet.

6. Brennstoffzelle nach einem der Ansprüche 1 bis 4, **dadurch gekennzeichnet, dass** die Stützstifte (11) einen kreisförmigen Querschnitt haben.

7. Brennstoffzelle nach einem der Ansprüche 1 bis 4, **dadurch gekennzeichnet, dass** die Stützstifte (11) einen rechtwinkligen Querschnitt haben.

8. Brennstoffzelle nach einem der Ansprüche 1 bis 4, **dadurch gekennzeichnet, dass** die Stützstifte (11) einen polygonalen Querschnitt haben.

9. Brennstoffzelle nach einem der Ansprüche 1 bis 8, **dadurch gekennzeichnet, dass** die Stützstifte (11) ein Gitter bilden, das dazu bestimmt ist, das erste Fluid gleichmäßig in dem Hohlraum (10) zu verteilen.

10. Brennstoffzelle nach Anspruch 9, **dadurch gekennzeichnet, dass** das Gitter versetzt vorgesehen ist.

11. Herstellungsverfahren für eine Brennstoffzelle nach einem der Ansprüche 1 bis 3, **dadurch gekennzeichnet, dass** es darin besteht, ein reaktives ionischen Ätzen in dem Substrat (2) vorzunehmen, um gleichzeitig den Hohlraum (10) und die Mehrzahl von Stützstiften (11) herzustellen.

12. Herstellungsverfahren nach Anspruch 11, **dadurch gekennzeichnet, dass** das Herstellungsverfahren darin besteht, an der Spitze jedes Stützstifts (11) durch physikalische Dampfabscheidung einen Wachstums-Promotor (23) aufzubringen, der dazu bestimmt ist, die Bildung eines Katalysatorträgers (24) zu fördern, auf den durch Aufmetallisieren eine katalytische Schicht (25) aufgebracht wird.

13. Herstellungsverfahren nach Anspruch 12, **dadurch gekennzeichnet, dass** der Katalysatorträger (24) aus Kohlenstoff-Nanotuben besteht.

14. Herstellungsverfahren für eine Brennstoffzelle nach einem der Ansprüche 1, 2 und 4, **dadurch gekennzeichnet, dass** es darin besteht, den Hohlraum (10) in das Substrat (2) zu ätzen und anschließend durch elektrolytisches Wachstum die Mehrzahl von Stützstiften (11) herzustellen.
